# EUROPEAN PATENT APPLICATION

(11) **EP 2 312 128 A1**
(43) Date of publication of application: **20.04.2011**
(21) Application number: 10186848.7
(22) Date of filing: 07.10.2010
(51) Int. Cl.: F01D 25/24, F01D 25/26, F23R 3/60, F01D 9/02, F02C 3/14

(54) **Method for assembling a gas turbine with silo combustion chamber**

(30) Priority: 07.10.2009 IT MI20091713
(71) Applicant: Ansaldo Energia S.p.A., 16156 Genova (IT)
(72) Inventor: Bertino, Gianluigi, 16031 Bogliasco (IT)
(74) Representative: Jorio, Paolo

(57) **Abstract**

A method for assembling a gas turbine (1) having silo combustion chamber, in particular for assembling the hot-gas inner casing of said turbine, comprises the steps of: providing a hot-gas inner casing (11) of the turbine (1) with resting feet (21) provided with respective first holes (23) having a pre-set first diameter (D1); providing an outer casing (8) of the turbine (1) with brackets (20) provided with respective second through holes (33) having a second diameter (D2), greater than the first diameter (D1); positioning the inner casing (11) around a rotor (2) of the turbine (1) and hence in the outer casing (8), and resting the feet (21) on respective brackets (20); centring horizontally the inner casing (11) with respect to the outer casing (8); arranging fixing plates (34), provided with threaded seats (35) having substantially the first diameter (D1), underneath the brackets (20) on the side opposite to the feet (21); and screwing fixing tie-rods (24), which have substantially the first diameter (D1) and are inserted through the first holes (23) and the second holes (33) in respective threaded seats (35).

## Description

The present invention relates to a method for assembling a gas turbine with silo combustion chamber, in particular for assembling the hot-gas inner casing of said turbine.

More in particular, the present invention relates to a method for assembling, in a gas turbine with silo combustion chamber or chambers, a hot-gas inner casing and the corresponding rotor covering element.

It should be noted that, in general terms, a gas turbine for the production of electrical energy comprises a rotor and a stator, an air compressor, and at least one combustion chamber in which compressed air coming from the compressor and fuel gas burn to produces hot gases that supply the turbine. The compressor and the turbine have in general stator parts and rotor parts, the latter normally fitted on a common shaft.

In gas turbines with combustion chambers of the so-called silo type, the combustion chambers extend substantially vertically above and/or laterally with respect to the shaft. In a typical configuration, a pair of combustion chambers are arranged on opposite sides of the turbine.

A silo combustion chamber is typically formed by an internal central element, the so-called "flame pipe", in which combustion occurs, and by a radially external annular compartment, which is set around the flame pipe and carries cold air coming from the compressor to the flame pipe. A diffuser carries compressed air from the compressor to the annular compartment, whilst the hot (burnt) gases produced in the flame pipe are conveyed into the turbine through a conveyor, which is normally constituted by a casing set substantially around the rotor components and in particular the shaft and referred to as "hot gas inner casing". It is then enclosed in an outer casing, which also encloses the stator components of the turbine and to which the inner casing is anchored.

In the typical case of a turbine with two lateral combustion chambers, the inner casing has a pair of opposite side openings, which communicate with the flame pipes of the two combustion chambers.

The inner casing in general comprises a rotor covering element, typically substantially cylindrical, which is set around the rotor (specifically, the shaft) and has a sealing flange coupled at the front to the diffuser of the compressor.

The inner casing is set around the shaft and consequently requires an accurate positioning, in particular an accurate centring with respect to the shaft but also an accurate positioning in an axial direction, during installation and in the course of possible subsequent maintenance operations.

Currently, fixing of the inner casing and of the corresponding rotor covering element on the gas turbine occurs using brackets positioned on the outer casing of the turbine and provided for supporting respective resting feet, which extend from the inner casing and have through holes for fixing screws. After centring of the inner casing has been carried out, the brackets are drilled in a position corresponding to the holes of the feet. The holes made in the brackets are then threaded so as to be engaged by the fixing screws.

Basically, it is necessary to arrange the bottom portion of the stator parts (i.e., the bottom half of the outer casing) without the rotor, then position correctly the inner casing with respect to the rotor, and arrange the ensemble constituted by the rotor and the inner casing on the outer casing so that it is possible to mark on the brackets the points in which the holes are to be made, remove the ensemble constituted by the rotor and the inner casing to make the threaded holes in the brackets, and finally bring back the inner casing with the rotor into position, and complete assembly. In order to adjust then the axial play of the rotor covering element with respect to the diffuser, a series of threaded grubscrews is used, which are set circumferentially spaced apart on the front sealing flange; said grubscrews must be provided and arranged according to the pre-determined axial position of the inner casing, case by case.

It is clear that the operations described above are laborious, complicated, and slow. In particular, these operations must be carried out by previously positioning all the stator parts without the rotor, and only after these operations have been carried out, is it possible to assemble the inner casing on the rotor and then complete assembly. The assembly cannot hence be carried out with the rotor installed.

An aim of the present invention is to provide a method for assembly of a gas turbine with silo combustion chamber, in particular for assembly of the hot-gas inner casing of said turbine, that will overcome the problems highlighted above.

The present invention hence regards a method for assembling a gas turbine with silo combustion chamber, in particular for assembling the hot-gas inner casing of said turbine, as defined in basic terms in the annexed Claim 1 and, as regards its additional features, in the dependent claims.

The method of the invention enables, as compared to the method currently used described above, elimination of the operations of drilling and threading exactly in the positions that are determined after centring of the inner casing. In addition to reducing the times for assembly, in this way it is possible to make displacements or replacements of the inner casing both during assembly in the factory and during maintenance, without having to make slots or other operations of constructional modification as is currently the case.

Further characteristics and advantages of the present invention will emerge clearly from the ensuing description of a non-limiting example of embodiment thereof, with reference to the figures of the annexed drawings, wherein:
- Figure 1a is a partial schematic perspective view, with parts removed for reasons of clarity, of a gas turbine with silo combustion chambers, during assembly according to the method of the invention;
- Figure 1b is a schematic perspective view, with parts removed for reasons of clarity, of a component of the turbine of Figure la, specifically a hot-gas inner casing;
- Figure 2 is a partially sectioned schematic view with parts removed for reasons of clarity of a further detail of the turbine of Figure 1a;
- Figures 3 and 4 are two perspective views of the detail of Figure 2, with parts removed for reasons of clarity; and
- Figures 5-8 show further details, once again in a schematic form, of the turbine of Figure 1.

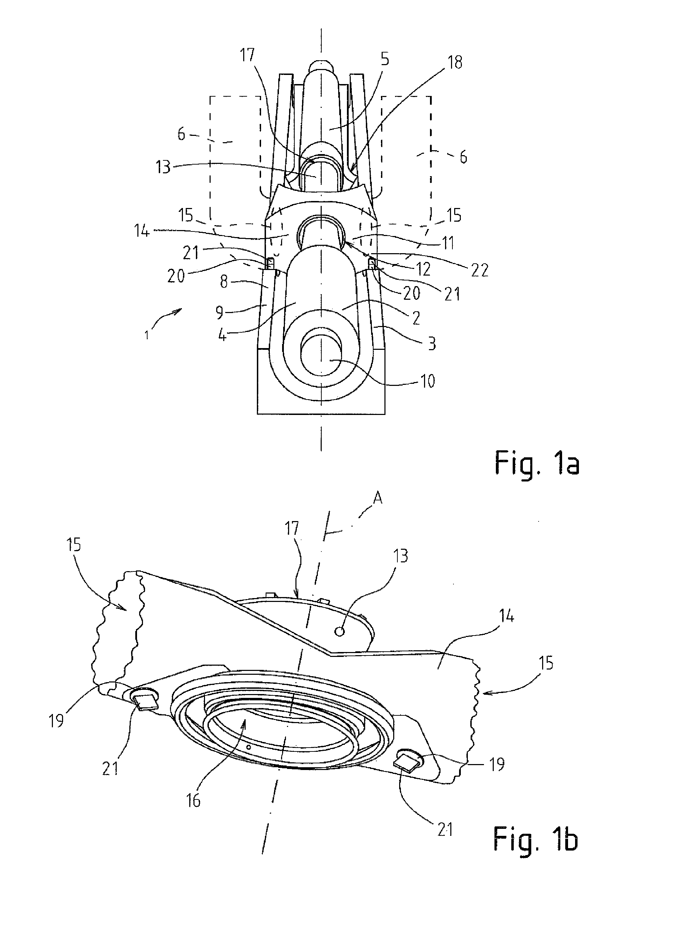

Figure 1a is a schematic and only partial illustration of a gas turbine having silo combustion chambers, designed for the production of electrical energy and having a general structure that is substantially known and is hence not described or illustrated in detail for reasons of simplicity.

In basic terms, the turbine 1 comprises a rotor 2 and a stator 3, which extend along and about a central axis A, a turbine section 4, and an air compressor 5 aligned along the axis A, and at least one silo combustion chamber 6, in which compressed air coming from the compressor 5 and fuel gas burn so as to produce hot gases that supply the turbine section 4. The compressor 5 and the turbine section 4 have stator parts supported by an outer casing 8, of which shown in Figure 1a is only a bottom portion 9 (substantially a bottom half), and rotor parts, which are fitted on a common shaft 10 rotating about the axis A to form the rotor 2.

In the non-limiting example shown in Figure 1a, the turbine 1 comprises two silo combustion chambers 6 (in themselves known and represented only schematically by a dashed line in Figure 1a), which extend substantially vertically above and laterally with respect to the shaft 10 on opposite sides of the turbine 1.

The turbine 1 further comprises a hot-gas inner casing 11, set within the outer casing 8 and around the rotor 2 and set axially between the compressor 5 and the turbine section 4. The inner casing 11 is provided with an inner through seat 12, which is set along the axis A and in which the rotor 2 is inserted and is delimited by a rotor covering element 13.

With reference also to Figure 1b, the inner casing 11 has a generally tubular shape transverse with respect to the axis A. In particular, the inner casing 11 has a substantially tubular side wall 14 closed like a ring about a transverse axis B substantially orthogonal to the axis A. The inner casing 11 has a pair of opposite end openings 15, delimited by respective opposite terminal edges, which are substantially circular, of the wall 14. The openings 15 are set on opposite sides of the axis A and are designed for connection with respective flame pipes (not illustrated) of the combustion chambers 6.

The inner casing 11 moreover has a pair of central through openings 16 substantially perpendicular to the axis A, formed in respective opposite portions of the wall 14 and facing one the compressor 5 and the other the turbine section 4. Housed in the openings 16 is the rotor covering element 13, which is formed by a substantially cylindrical tubular body set around the rotor 2 and is provided with a radially external sealing flange 17 for front coupling with a diffuser 18 of the compressor 5.

The casing has opposite front plates 19, facing the compressor 5 and the turbine section 4, set around and/or alongside the openings 16.

The outer casing 8 is provided with brackets 20 for supporting and fixing the inner casing 11. In particular, the casing 8 is provided with two pairs of brackets 20 set facing respective plates 19 of the inner casing 11 and set on opposite sides of the axis A.

The inner casing 11 is provided with as many supporting feet 21, which extend from respective outer surface portions 22 of the inner casing 11, for example, from the plates 19, for resting on respective brackets 20.

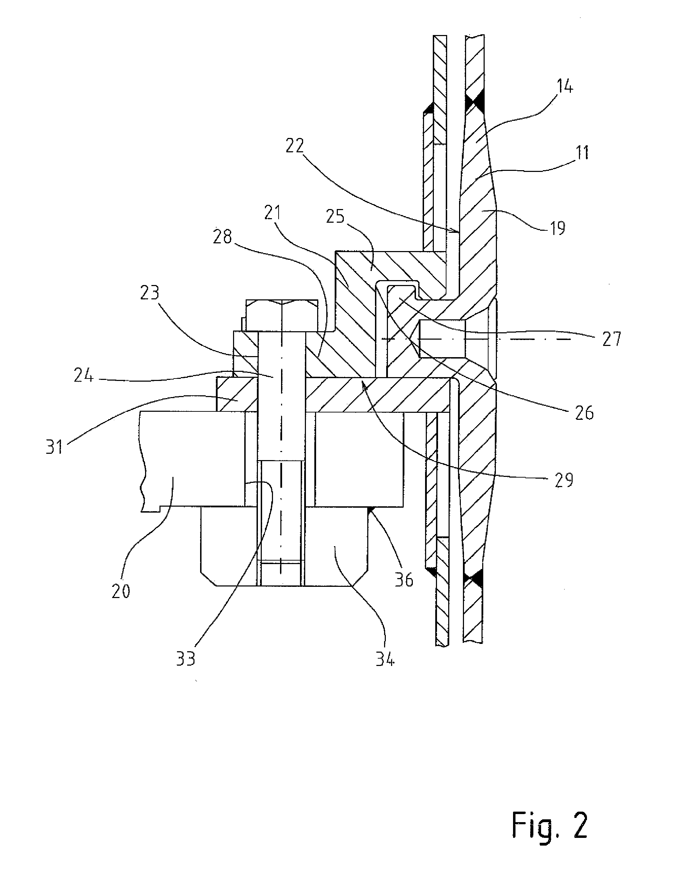

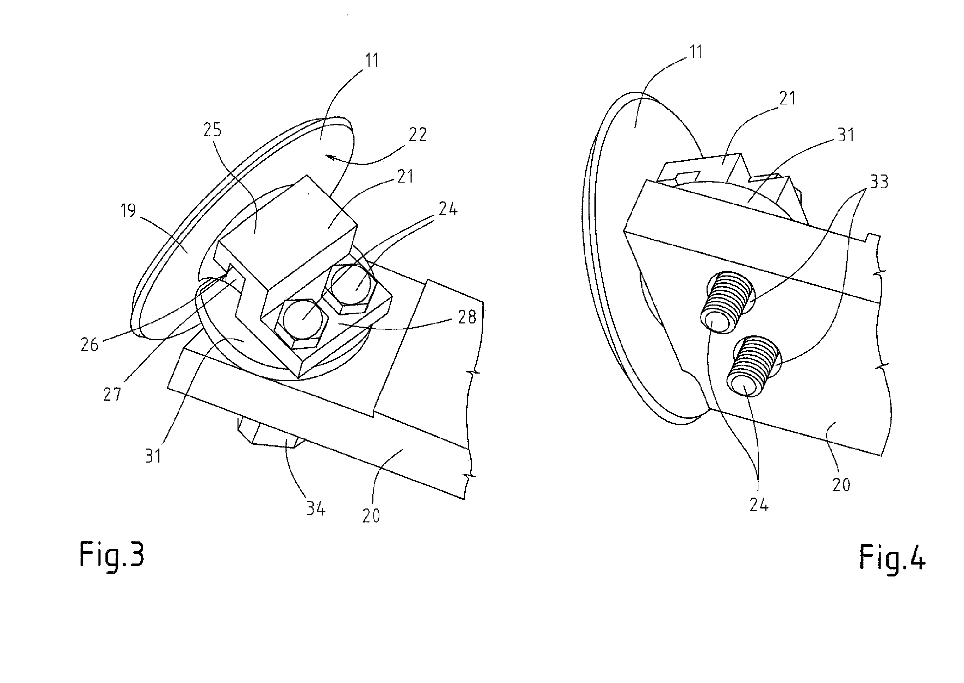

With reference also to Figures 2-4, each foot 21 has one or more circular through holes 23, for example a pair of holes 23 set alongside one another, engaged by respective fixing tie-rods 24 (threaded tie-rods or screws). Advantageously, the holes 23 are not threaded and have a diameter D1 substantially equal to the outer diameter of the tie-rods.

In the non-limiting example shown in Figures 2-4, each foot 21 comprises a bracket-shaped portion 25 having a seat 26 that engages a projection 27, which extends from an outer surface portion 22 of the casing, and a connection portion 28 provided with the holes 23 and having a substantially plane bottom surface 29.

Each foot 21 rests on a bracket 20. Possibly, as will be clarified hereinafter, a shim 31, constituted by a flat plate of appropriate height and perforated for the passage of a tie-rod 24, is set between the foot 21 and the bracket 20.

The brackets 20 are provided with circular through holes 33 having a diameter D2 greater than the diameter D1 and set in such a way as to be substantially aligned to respective holes 23.

The holes 33 on the brackets 20 have a diameter D2 greater than the diameter D1 of the holes 23 of the feet 21 and of the tie-rods 24 and such as to enable all the displacements of the inner casing 11 allowed by the machining tolerances of the inner casing 11, in particular exceeding the diameter D1 by at least the machining tolerances of the feet 21, as will be clarified hereinafter.

Set underneath each bracket 20 and on the side opposite to the foot 21 resting on said bracket is a fixing plate 34, which is substantially flat and has circular threaded seats 35 (preferably passing through the fixing plate 34) having a diameter substantially equal to the diameter D1.

Each tie-rod 24 is inserted through a hole 23 and a hole 33 (as well as through a shim 31) and engages a threaded seat 35, being screwed within said threaded seat.

The method for assembly of the inner casing 11 in accordance with the invention comprises the steps of:
- providing the resting feet 21 of the inner casing 11 with the respective through holes 23 of diameter D1;
- providing the brackets 20 with the respective through holes 33 of diameter D2, greater than the diameter D1 and in particular exceeding the diameter D1 by at least the machining tolerances of the inner casing 11 (specifically of the feet 21) ;
- positioning the inner casing 11 around the rotor 2;
- bringing the inner casing 11 (and the rotor 2) into the outer casing 8 and precisely into the bottom portion 9 of the outer casing 8 and resting the feet 21 on respective brackets 20;
- centring horizontally the inner casing 11 with respect to the outer casing 8, moving horizontally (i.e., in a direction parallel to the ground) the inner casing 11 with respect to the outer casing 8;
- once the horizontal centring of the inner casing 11 has been carried out, arranging the fixing plates 34, provided with the threaded seats 35 of diameter D1, underneath the brackets 20 on the side opposite to the feet 21;
- inserting the tie-rods 24 of diameter D1 in the holes 23 that are made in the feet 21 and through the holes 33 formed in the brackets 20, engaging the threaded seats 35 of the fixing plates 34 with the tie-rods 24, and screwing the tie-rods 24 in the threaded seats 35;
- fixing each fixing plate 34 to the respective bracket 20, via welding spots 36 or via mechanical connection; and
- finally gripping the tie-rods 24 into the respective threaded seats 35.

The difference in diameter between the holes 23 and the holes 33 (the latter being of a diameter greater than the former) defines (for each tie-rod 24) an adjustment space 37 available for adjustment of the horizontal position of the inner casing 11.

Clearly, some of the steps indicated can be carried out in a different order from what is represented herein by way of example. For instance, it is also possible to start to insert the tie-rods 24 into the holes 23, 33 and/or set the fixing plates 34 (without fixing them definitively) and engage them via the tie-rods 24, even before completing the displacements of the inner casing 11 (said displacements will be in any case allowed by the adjustment space 37, even if the holes 23, 33 are already engaged by the tie-rods 24). Once horizontal centring of the inner casing 11 has been completed, the next step is final gripping of the tie-rods 24 and fixing of the fixing plates 34 to the brackets 20.

To ensure also a proper vertical centring of the inner casing 11, the shims 31 of appropriate height are used. The method hence also comprises a step of inserting one or more flat shims 31 between each bracket 20 and the respective foot 21 for vertical centring of the inner casing 11.

Advantageously, before final insertion of the shims 31, the method comprises the steps of:
- for each foot 21, inserting one or more provisional standard shims between the bracket 20 and the foot 21 until the inner casing 11 is centred vertically;
- measuring the overall height (thickness) of the packs of shims thus formed on each bracket 20 to determine the final size of the shims 31; and
- replacing the provisional packs of shims with the final shims 31 having a thickness equal to that of the packs that they replace.

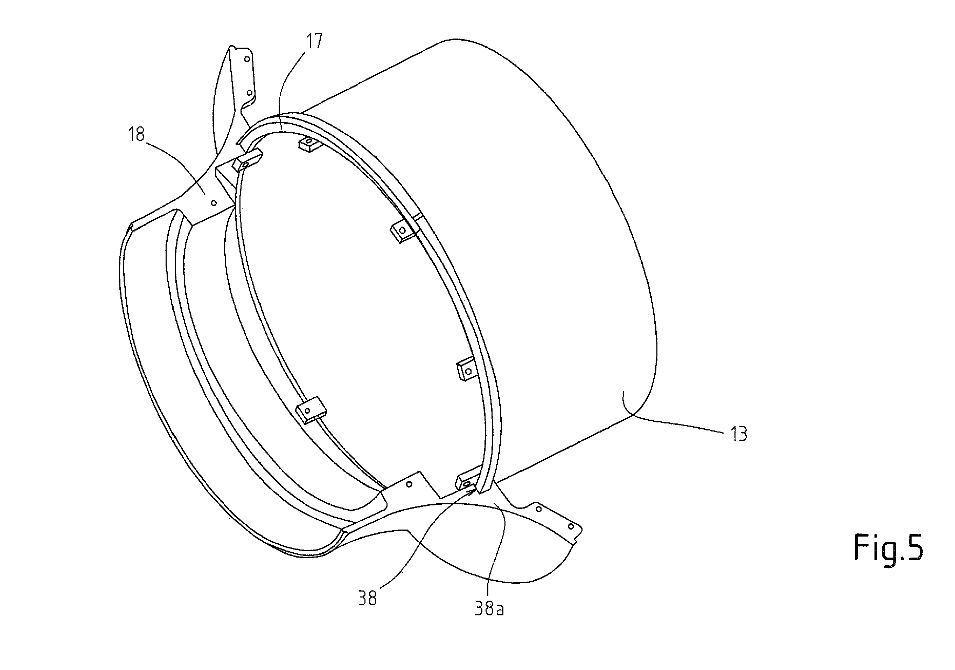

To complete assembly of the inner casing 11, the method also comprises a step of adjusting the axial play (along the axis A) between the sealing flange 17 of the rotor covering element 13 and an annular seat 38, which is formed in the diffuser 18 and in which the flange 17 is housed, as shown in detail in Figure 5.

With reference to Figures 5-8, the flange 17 is housed with axial play (along the axis A) in the annular seat 38 formed in a side wall 38a of the diffuser 18 and having a pair of opposite lateral sides 39 substantially orthogonal to the axis A and facing respective faces of the flange 17.

The method of the invention comprises the step of introducing arc-shaped flat inserts 40, of a selected thickness, into the annular seat 38, between the flange 17 and one or both of the sides 39 of the annular seat 38. The inserts 40 are selected so as to have a thickness such as to adjust the axial position of the flange 17 in the annular seat 38 and consequently the axial position of the rotor covering element 13.

Preferably, the inserts 40 are arranged on either side of the flange 17, hence between each face of the flange 17 and a side 39.

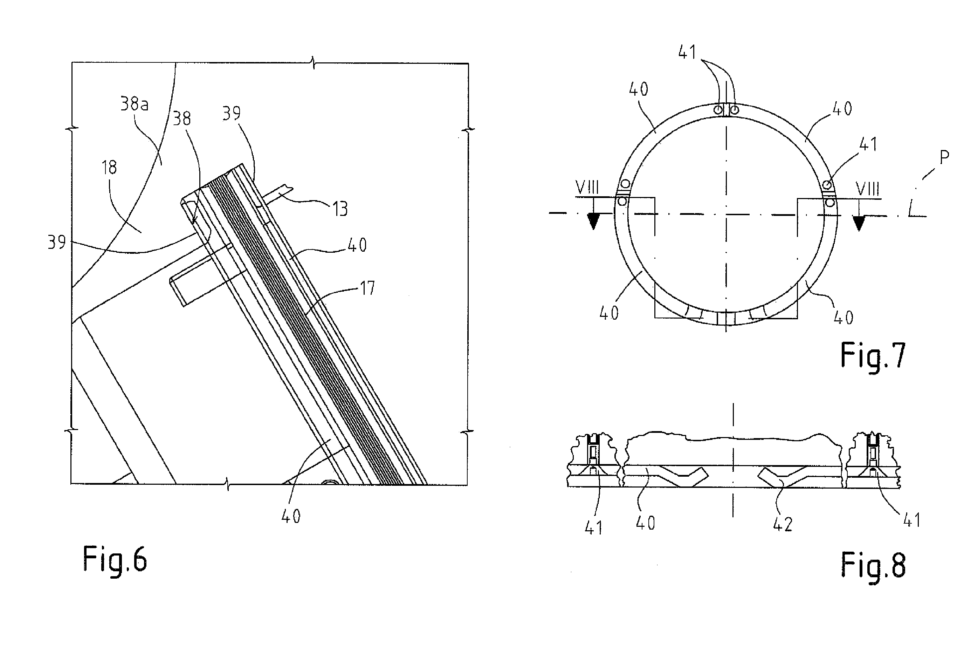

Preferably, the inserts 40 are shaped as half-rings and a pair of inserts 40 is used on each side of the flange 17 for covering substantially the entire circumference of the flange 17, as shown in Figures 7 and 8 (where Figure 8 is a cross-sectional view according to the plane of trace VIII-VIII of Figure 7). It is in any case understood that the inserts 40 can have a different angular extension and can be used in a number different from what is indicated herein purely by way of example.

The inserts 40 set in the bottom portion of the annular seat 38 can be introduced into the annular seat 38 also when the rotor 2 is installed, in so far as they are fixed on the outside of the horizontal middle plane P of the rotor covering element 13. Accordingly, hence, the inserts 40 are first introduced into the annular seat 38 and then clamped with screws 41 set outside of the horizontal middle plane P.

Some inserts 40 have moreover, optionally, a deformed portion 42 so as to create a slight forcing in the annular seat 38 such as to prevent the so-called phenomenon of "vibration hammering" during operation. Said deformation is eliminated once, as a result of thermal expansion, the play present when "cold" is eliminated. For example, the portion 42 projects axially with respect to the remaining (flat) portions of the insert 40.

The inserts 40 can be inserted also at the end of assembly (i.e., after the operations described previously for centring the casing, with rotor installed, have been carried out) and can also be extracted and replaced without having to dismantle the rotor 2.

Finally, it is clear that modifications and variations may be made to the method described and illustrated herein, without thereby departing from the scope of the annexed claims.

## Claims

1. A method for assembling a gas turbine (1) with silo combustion chamber or chambers, in particular for assembling a hot-gas inner casing of the turbine, comprising the steps of:
- providing a hot-gas inner casing (11) of the turbine (1) with resting feet (21) provided with respective first through holes (23) having a first diameter (D1);
- providing an outer casing (8) of the turbine (1) with brackets (20), provided with respective second through holes (33) having a second diameter (D2), greater than the first diameter (D1);
- positioning the inner casing (11) in the outer casing (8) and resting the feet (21) on respective brackets (20);
- moving horizontally the inner casing (11) with respect to the outer casing (8) exploiting an adjustment space defined by the diameter difference between the first holes (23) and the second holes (33), for horizontal centring of the inner casing (11) with respect to the outer casing (8); and
- before or after horizontal centring of the inner casing (11), inserting fixing tie-rods (24) through the first holes (23) and the second holes (33) and engaging with the tie-rods (24) respective threaded seats (35) formed in fixing plates (34) applied underneath respective brackets (20) on the side opposite to the feet (21).

2. The method according to Claim 1, comprising, before the step of positioning the inner casing (11) in the outer casing (8), the step of arranging the inner casing (11) around a rotor (2) of the turbine, and then positioning together the rotor (2) and the inner casing (11) in the outer casing (8).

3. The method according to Claim 1 or Claim 2, comprising, after engaging the threaded seats (35) of the fixing plates (34) with the tie-rods (24), the step of fixing each fixing plate (34) to the respective bracket (20), by means of welding spots (36) or via mechanical connection.

4. The method according to any of the preceding claims, wherein the second holes (33) have a second diameter (D2) exceeding the first diameter (D1) by at least the machining tolerances of the inner casing (11) and specifically of the feet (21).

5. The method according to any one of the preceding claims, wherein the fixing plates (34) are arranged and engaged by the tie-rods (24) before completing horizontal centring of the inner casing (11).

6. The method according to any one of the preceding claims, wherein, once horizontal centring of the inner casing (11) is completed, the tie-rods (24) are finally tightened and the fixing plates (34) are fixed to the brackets (20).

7. The method according to any one of the preceding claims, wherein the tie-rods (24) and the threaded seats (35) have substantially the first diameter (D1).

8. The method according to any one of the preceding claims, comprising a step of vertical centring of the inner casing (11), wherein one or more flat shims (31) are inserted between each bracket (20) and the respective foot (21) for vertical centring of the inner casing (11).

9. The method according to any one of the preceding claims, wherein the inner casing (11) comprises a rotor covering element (13) provided with a sealing flange (17) for front coupling to a diffuser (18), housed in an annular seat (38) formed in the diffuser; and the method comprises a step of adjustment of the axial play between the flange (17) and the corresponding annular seat (38), wherein flat arc-shaped inserts (40) of a selected thickness are inserted in the annular seat (38), between the flange (17) and one or both of respective sides (39) of the annular seat (38).

10. The method according to Claim 9, wherein the inserts (40) are selected so as to have a thickness such as to adjust the axial position of the flange (17) in the annular seat (38) and consequently the axial position of the rotor covering element (13).

11. The method according to Claim 9 or Claim 10, wherein the inserts (40) are fixed in the annular seat (38) and clamped therein with screws (41) arranged on the outside of a horizontal middle plane (P) of the rotor covering element (13).

12. The method according to any one of Claims 9 to 11, wherein some inserts (40) have a deformed portion (42), for example projecting axially with respect to remaining flat portions of the insert (40), so as to create a slight forcing in the annular seat (38).
